(19) Europäisches Patentamt
European Patent Office
Office européen des brevets

(11) Veröffentlichungsnummer: **0 272 222**
**B1**

(12) **EUROPÄISCHE PATENTSCHRIFT**

(45) Veröffentlichungstag der Patentschrift: **30.01.91**

(51) Int. Cl.$^5$: **C 08 L 63/00,** C 08 L 67/00, C 09 J 163/00

(21) Anmeldenummer: **87810754.9**

(22) Anmeldetag: **14.12.87**

(60) **Teilanmeldung 89121194.8 eingereicht am 14/12/87.**

# (54) Epoxidharze enthaltend Polyester auf Polyalkylenglykolbasis.

(30) Priorität: **19.12.86 CH 5097/86**

(43) Veröffentlichungstag der Anmeldung:
**22.06.88 Patentblatt 88/25**

(45) Bekanntmachung des Hinweises auf die Patenterteilung:
**30.01.91 Patentblatt 91/05**

(84) Benannte Vertragsstaaten:
**BE CH DE ES FR GB IT LI NL SE**

(56) Entgegenhaltungen:
**DE-A-1 520 769**
**US-A-3 523 143**
**US-A-3 816 365**

**CHEMICAL ABSTRACTS, Band 76, Nr. 10, 06.März 1972, Seite 32, Zusammenfassung Nr. 46911v, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**
(84) **BE CH ES FR GB IT LI NL SE**

(73) Patentinhaber: **CIBA-GEIGY GmbH**
**Oeflinger Strasse 44**
**D-7867 Wehr/Baden (DE)**
(84) **DE**

(72) Erfinder: **Mülhaupt, Rolf, Dr.**
**Chemin de la Prairie 2**
**Ch-1723 Marly (CH)**
Erfinder: **Möckel-Weber, Julia, Dr.**
**Oberdorfstrasse 3**
**D-7860 Schopfheim/Baden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 272 222 B1

**Beschreibung**

Die vorliegende Erfindung betrifft eine Epoxidmischung enthaltend Polyester auf Polyalkylenoxidbasis und Dicyandiamid, sowie die Verwendung ausgewählter Epoxidmischungen als korrosionsfeste Klebstoffe.

Gehärtete Epoxidharze sind im allgemeinen sehr spröde Materialien, die sehr geringe Biegefestigkeiten und Schlagzähigkeiten aufweisen. Um dieser Versprödung entgegenzuwirken, setzt man dem Epoxidharz epoxidterminierte elastische Präpolymere, wie z.B. Epoxidaddukte von carboxyl- oder aminoterminierten Butadien/Acrylnitril Copolymeren, als Flexibilisatoren zu. Dabei ist zu beachten, dass durch solche Zusätze oft eine starke Zunahme der Viskositäten der Epoxidharzmischungen eintritt, was die Verarbeitung erschwert. Polyester wurden ebenfalls als flexibilisierende Zusätze vorgeschlagen, doch beobachtet man in diesen Fällen oft Hydrolyseinstabilität, erhöhte Wasseraufnahme und starke Abnahmen der Zugscherfestigkeiten nach Lagerung in feucht-heissem korrosionsförderndem Klima.

In der DE-AS 1,816,096 werden Diglycidylester von carboxyl-terminierten Polyestern auf der Basis von aromatischen Dicarbonsäuren und Polyalkylenglykolen beschrieben. Die Epoxidharze können, je nach Harz- und/oder Härtertyp, zu stark oder schwach flexiblen oder zu gummielastischen Körpern verarbeitet werden. Die Wasseraufnahme der gehärteten Produkte lässt noch Wünsche offen; ferner beobachtet man in der Regel Festigkeitsverluste bei der Wasserlagerung.

Solche Nachteile treten auch bei anderen Epoxidmischungen auf, die Polyester als Flexibilisatoren enthalten.

Im US-Patent 3,397,254 werden carboxyl-terminierte Polyester beschrieben, die als Epoxidhärter eingesetzt werden können. Diese Polyester leiten sich von cyclischen Dicarbonsäuren ab. Als Alkoholkomponente verwendet man unter anderem Alkylenglykole, darunter auch Dipropylenglykol oder Triethylenglykol.

Nach den Ausführungsbeispielen werden bevorzugt Propylenglykol oder Diethylenglykyol als Alkoholkomponenten eingesetzt. Die daraus resultierenden Polyester besitzen im Vergleich zu den Typen mit längeren Polyalkylenglykoleinheiten eine erhöhte Wasseraufnahme und geringere flexibilisierende Wirkung.

Im US-Patent 3,576,903 werden Addukte aus einem Epoxidharz und einem carboxyl-terminierten Polyester oder Polyamid beschrieben. Die Verbindungen lassen sich in Kombination mit einem Härter zu flexiblen und rasch härtbaren Beschichtungen verarbeiten.

Schliesslich sind aus der JP—OS 53—40,100 Polyester aus aliphatischen Diolen, alicyclischen und aliphatischen Dicarbonsäuren bekannt, die sich als Addukte an ein Epoxidharz als Epoxidhärter einsetzen lassen und Produkte mit guter Flexibilität ergeben.

Im US Patent 3,280,077 werden carboxyl-terminierte Polyester aus cyclischen Dicarbonsäuren, einem zwei- oder mehrwertigen Polyol und einer Alkylenoxidkomponente beschrieben. Die Polyester eignen sich als Ersatzstoffe für Epoxidharze. Harzformulierungen mit einem Epoxidgehalt von weniger als 50 Gew.% werden hergestellt, die jedoch nur kurze Polyalkylenoxidsegmentlängen aufweisen.

Aus dem US-Patent 3,299,008 sind Polyester bekannt, die sich von Polyolen, unter anderem von Polyalkylenglykolen, und cyclischen Carbonsäureanhydriden ableiten. Bevorzugt verwendet man cyclische Anhydride aliphatischer Carbonsäuren oder cycloaliphatische Carbonsäureanhydride mit weniger als 20 C-Atomen. Die Verbindungen werden als Epoxidflexibilisatoren eingesetzt.

Um die Hydrolysebeständigkeit zu erhöhen, werden im US-Patent 3,723,569 Epoxidharzmischungen enthaltend zusätzlich einen Blockcopolyester, der aus Segmenten enthaltend kurzkettige Diolreste bzw. langkettige Polyalkylenoxidreste besteht, vorgeschlagen. Die Copolyester verleihen den Mischungen ausezeichnete Hydrolysebeständigkeit und eine Kombination von guter Festigkeit und guten Tieftemperatureigenschaften. Diese Copolyester sind teilkristallin; sie weisen also Bezirke mit hohen intermolekularen Wechselwirkungen auf. Beim Einmischen solcher Copolyester in Epoxidharze können daher Löslichkeitsprobleme auftreten; ausserdem sind die Copolyester-Epoxidharzmischungen relativ hoch viskos, so dass bei deren Verarbeitung Probleme auftreten können.

Ferner werden in der US—A—3,523,143 Epoxidharzformulierungen beschrieben, die einen carboxyl-terminierten Polyester enthalten und die mit Carbonsäureanhydriden gehärtet werden.

Polyester auf Basis von Dimerfettsäuren und Polybutylenoxid sind aus der EP—A 30,904 bekannt. Die Verbindungen werden als Zwischenprodukte bei der Herstellung von Polyesteramiden verwendet.

Es wurde jetzt eine ausgewählte Klasse von Polyesterflexibilisatoren gefunden, die neben niedrigen Viskositäten eine Kombination von hoher Festigkeit mit guter Flexibilisierung auch bei tiefen Temperaturen sowie eine gute Beständigkeit in korrosiver Umgebung ergeben. Ausserdem wurden phenol-terminierte flexible Polyester auf Polyalkylenoxidbasis gefuden, die sich als reaktive flexibilisierende Reaktiv-Verdünner eignen und in der Regel keine Voradduktbildung mit dem Epoxidharz erfordern.

Die vorliegende Erfindung betrifft eine Zusammensetzung enthaltend

a) mindestens eine Verbindung mit mindestens einer 1,2-Epoxidgruppe im Molekül,

b) mindestens eine Verbindung der Formeln I, II oder III

$$\left(HO-\overset{O}{\overset{\|}{C}}\right)_m R^1-\overset{O}{\overset{\|}{C}}-O-R^2-O-\overset{O}{\overset{\|}{C}}-R^1-\left(\overset{O}{\overset{\|}{C}}-OH\right)_n \qquad (I),$$

$$HO-\left[\overset{O}{\overset{\|}{C}}-R^3-\overset{O}{\overset{\|}{C}}-O-R^2-O-\right]_y \overset{O}{\overset{\|}{C}}-R^3-\overset{O}{\overset{\|}{C}}-OH \qquad (II),$$

$$R^4-\left[\overset{O}{\overset{\|}{C}}-O-R^2-O-\overset{O}{\overset{\|}{C}}-R^1-\left(\overset{O}{\overset{\|}{C}}-OH\right)_m\right]_p \qquad (III),$$

worin m und n unabhängig voneinander 1 oder 2 sind, y eine ganze Zahl von 2 bis 10 ist, p 3 oder 4 bedeutet,

$R^1$, $R^2$ und $R^4$ sich von Resten aliphatischer, cycloaliphatischer oder aromatischer Carbonsäuren ableiten, wobei $R^1$ ein zwei- oder dreiwertiger Rest, $R^3$ ein zweiwertiger Rest und $R^4$ ein drei- oder vierwertiger Rest nach dem Entfernen der Carboxylgruppen ist, und $R^2$ der Rest eines aliphatischen oder cycloaliphatischen Diols nach dem Entfernen der beiden Hydroxylgruppen ist, und

c) Dicyandiamid als Härter mit der Massgabe, dass mindestens 70 Gew.% der Reste $R^1$ oder $R^3$, bezogen auf die Gesamtmenge dieser Reste, sich von Dimer- und/oder Trimerfettsäuren ableiten, dass mindestens 70 Gew.% der Reste $R^2$, bezogen auf die Gesamtmenge dieser Reste, Gruppen der Formel V sind

$$-\left(C_qH_{2q}-O\right)_x C_qH_{2q}- \qquad (V),$$

worin x eine ganze Zahl von 5 bis 40 ist und q 3 oder 4 bedeutet oder bis zu 30 Gew.% innerhalb eines Restes der Formel V auch Gruppen mit q = 2 sein können, und dass die Reste $R^1$, $R^2$ und $R^3$ und die Indizes x und qu in einem Molekül innerhalb der gegebenen Definitionen unterschiedlich sein können.

Als Komponente a) der Zusammensetzungen dieser Erfindung eignen sich in der Regel alle aliphatischen, cycloaliphatischen, aromatischen, araliphatischen oder heterocyclischen Epoxidharze. Man kann auch Gemische dieser Harze einsetzen.

Bevorzugte Epoxidharze enthalten wenigstens zwei Reste der Formel VI

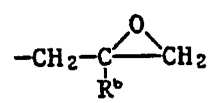

(VI),

wobei diese Reste dirket an Sauerstoff-, Stickstoff- oder Schwefelatome gebunden sind, worin $R^b$ Wasserstoff oder Methyl ist.

Beispielhaft für Epoxidharze dieses Typs wären zu erwähnen:

I) Polyglycidyl- und Poly-(β-methylglycidyl)-ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendun finden, wie beispielsweise Phthalsäure, Isophthalsäure oder Terephthalsäure.

II) Polyglycidyl- oder Poly-(β-methylglycidyl)-ether erhältlich dfurch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung; oder erhältlich durch Vorverlängerung einer Bis-Epoxidverbindung mit einem Bisphenol in an sich bekannter Weise.

Solche Ether leiten sich beispielsweise ab von acyclischen Alkoholen, wie Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-

diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 4,4'-Dihydroxyphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$—$C_9$Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.

Die Epoxidverbindungen können sich aber auch von der Umsetzung von Diglycidylethern zweiwertiger Phenole, beispielsweise von 2,2-Bis-(4-hydroxyphenyl)-propan, mit zweiwertigen Phenolen, beispielsweise mit 2,2-Bis-(4-hydroxyphenyl)-propan, ableiten.

III) Poly-(n-glycidyl) Verbindungen sind beispielsweise erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl) Verbindungen zählen aber auch Triglycidylisocyanurat, N,N'-Diglycidylderivate von Cycloalkylenharnstoffen, wie Ethylenharnstoff oder 1,3-Propylenharnstoff, un N,N'-Diglycidylderivate von Hydantoinen, wie von 5,5-Dimethylhydantoin.

IV) Beispiele für Poly-(S-glycidyl) Verbindungen sind Di-S-glycidylderivate, die sich von Dithiolen, wie beispielsweise Ethan-1,2-dithiol oder Bis-(4-merkaptomethylphenyl)-ether ableiten.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Ebenfalls in Betracht kommen Epoxidharze, in denen einige oder sämtliche Epoxidgruppen mittelständig sind, wie Vinylcyclohexendioxyd, Limonendioxyd, Dicyclopentadiendioxyd, Bis-(2,3-epoxicyclopentyl)-ether, 2,3-Epoxicyclopentylglycidylether, 4-Oxatetracyclo[6.2.1.$0^{2,7}$.$0^{3,5}$]undec-9-ylglycidylether, 1,2-Bis-(4-oxatetracyclo[6.2.1.$0^{2,7}$.$0^{3,5}$]undec-9-yloxy)ethan, der 3,4-Epoxicyclohexylmethylester der 3',4'-Epoxicyclohexancarbonsäure sowie dessen 6,6'-Dimethylderivat, der Bis-(3,4-epoxicyclohexancarbonsäureester) des Ethylenglykols, der Bis-adipinsäureester des 3,4-Epoxi-6-methylcyclohexanmethylols oder 3-(3,4-Epoxicyclohexyl)-8,9-epoxi-2,4-dioxaspiro[5.5]undecan.

Besonders bevorzugt als Epoxidharze werden Polyglycidylether von Bisphenolen, wie beispielsweise von 2,2-Bis-(4-hydroxyphenyl)-propan oder Bis-(hydroxyphenyl)-methan (Isomerengemisch) oder insbesondere die vorverlängeren Typen auf Basis von 2,2-Bis-(4-hydroxyphenyl)-propandiglycidylether mit 2,2-Bis-(4-hydroxyphenyl)-propan, von Novolaken, die durch Umsetzung von Formaldehyd mit einem Phenol gebildet werden, oder von den oben erwähnten aliphatischen Polyolen, insbesondere von Butan-1,4-diol oder Pentaerithrit. Ebenfalls bevorzugt als Epoxidharze werden die Diglycidylester der oben erwähnten Dicarbonsäuren.

Die Reste $R^1$ und $R^3$ leiten sich hauptsächlich von Dimerfettsäuren oder Trimerfettsäuren ab. Dabei handelt es sich um Dicarbonsäuren bzw. Tricarbonsäuren, die durch Dimerisierung bzw. Trimerisierung ethylenisch ungesättigter Carbonsäuren erhältlich sind. Solche Dimer- oder Trimerfettsäuren können aliphatische und cycloaliphatische Strukturelemente enthalten. Sie können gesättigt oder ungesättigt sein. Bevorzugt werden die hydrierten Typen. Eine Übersicht über Strukturen, chemische und physikalische Eigenschaften und Herstellung von Dimer- und Trimerfettsäuren bietet Kirk-Othmer, Encyclopedia of Chem. Technology, *Vol. 7,* 768—781 (1979). In der Regel handelt es sich bei diesen Produkten um Gemische aus Di- oder Tricarbonsäuren mit mehr als 30 C-Atomen; bevorzugt werden Di- oder Trimerfettsäuren mit 36 bis 54 C-Atomen.

Dimerfettsäuren sind unter der Bezeichnung "PRIPOL®", "EMPOL®" oder "UNEM®" im Handel erehätlich. Diese Produkte enthalten teilweise unterschiedliche Anteile an Trimersäuren; es kann sich bei den Produkten auch um reine Trimersäuren handeln.

$R^1$ und $R^3$ können zu einem gewissen Anteil zweiwertige Reste einer aliphatischen Carbonsäure nach dem Entfernen der Carboxylgruppen sein; dabei handelt es sich in der Regel um geradkettige oder verzweigtkettige Alkylenreste, die sich insbesondere von α,ω-Alkylendicarbonsäuren ableiten. Die Alkylenketten können gegebenenfalls durch Sauerstoff- oder Schwefelatome unterbrochen sein und können gegebenenfalls ethylenisch ungesättige Bindungen enthalten.

Bevorzugt werden gesättigte, geradkettige $C_2$—$C_{30}$-Alkylenreste.

Beispiele für diese Reste sind Ethylen, Tri-, Tetra-, Penta-, Hexa-, Hepta-, Octa-, Deca-, Dodeca-,

Tetradeca-, Hexadeca-, Octadeca-, Eicosa-, Docosa- oder Tricosamethylen.

Leiten sich Teile der Reste $R^1$, $R^3$ oder $R^4$ von einer cycloaliphatischen Carbonsäure ab. so handelt es sich dabei beispielsweise um zwei-, drei- oder vierwertige cycloaliphatische Reste mit 5 bis 7 Ringkohlenstoffatomen. Solche Reste leiten sich beispielsweise von Hexahydrophthalsäure, Hexahydroisophthalsäure oder Hexahydroterephthalsäure ab.

Leiten sich Teile der Reste $R^1$, $R^3$ oder $R^4$ von einer aromatischen Carbonsäure ab, so handelt es sich dabei beispielsweise um zwei-, drei- oder vierwertige aromatische Reste, gegebenenfalls um kondensierte oder über Brückengruppen verknüpfte Systeme.

Vorzugsweise handelt es sich bei diesen Resten um Benzolkerne, gebenenfalls um über eine Brücke gebundenes Biphenyl, oder um Naphthalin, insbesondere um Benzolkerne.

Beispiele für aromatische Carbonsäuren, von denen sich diese Reste ableiten, sind Phthalsäure, Isophthalsäure, Terephthalsäure, Trimellithsäure, Trimesinsäure, Pyromellithsäure, 3,3',4,4'-Benzophenontetracarbonsäure, 3,3',4,4'-Tetracarboxybiphenyl, 4,4'-Dicarboxydiphenylmethan, 3,3',4,4'-Tetracarboxydiphenylmethan, 4,4'-Dicarboxydiphenylether oder 1,4,5,8-Tetracarboxynaphthalin.

Bevorzugte aromatische Cokomponenten $R^3$ sind 1,2- und 1,4-Phenylen, insbesodere 1,2-Phenylen.

Bevorzugte aromatische Cokomponenten $R^1$ sind 1,2- oder 1,4-Phenylen oder 1,2,4-Benzoltriyl oder 1,3,5-Benzoltriyl. Ganz besonders bevorzugte aromatische Reste $R^1$ sind 1,2-Phenylen und 1,2,4-Benzoltriyl.

Bevorzugte aromatische Reste $R^4$ sind 1,2,4-Benzoltriyl oder 1,3,5-Benzoltriyl oder 1,2,4,5-Benzoltetrayl. Ganz besonders bevorzugt man 1,3,5-Benzoltriyl.

Die Reste der Formel V leiten sich von Polyalkylenoxiden mit $C_3$—$C_4$-Alkylenoxideinheiten ab. Die Segmente müssen eine gewisse Mindestlänge besitzen (x = 5), um dem Polyester eine ausreichende Flexibilität zu verleihen. Die Reste der Formel V leiten sich bevorzugt von Propylenoxid und besonders bevorzugt von Butylenoxid ab. Es handelt sich dabei also um Strukturelemente der Formeln $-(O-CH(CH_3)-CH_2)_{x+1}-$ oder $-(O-CH_2-CH_2-CH_2-CH_2)_{x+1}-$ (x = 5—40).

Die Strukturelemente der Formel V können auch als Mischungen innerhalb eines Polyestermoleküls vorliegen. Selbstverständlich kann man auch Copolyethersegmente der Formel V verwenden, also Reste der Formel V, worin der Index q innerhalb eines Restes unterschiedliche Bedeutungen besitzt. Bei dieser Ausführungsform können auch bis zu 30 Gew.% Ethylenglykoleinheiten (q = 2) einkondensiert sein.

Bevorzugt setzt man auch Gemische aus Propylenoxid- und Butylenoxideinheiten (Gemische innerhalb eines Polyestermoleküls oder Copolyether) ein. Das bevorzugte Gewichtsverhältnis von Propylenoxid- zu Butylenoxideinheiten beträgt bei dieser Ausführungsform 1:9 bis 9:1.

Neben den Resten der Formel V können als Cokomponenten noch bis zu 30 Gew.% anderer aliphatischer Diolreste vorliegen. Dabei handelt es sich in der Regel um geradkettige oder verzweigte $C_2$—$C_{12}$Alkylenreste. Beispiele für die zugrundeliegenden Diole sind Ethylenglykol, Propylenglykol, Butylenglykol, Neopentylglykol, 1,6-Hexandiol, 1,8-Octoandiol, 1,10-Decandiol oder 1,12 Dodecandiol.

Neben den Resten der Formel V können als Cokomponenten noch bis zu 30 Gew.% anderer cycloaliphatischer Diolreste vorliegen. Dabei handelt es sich in der Regel um monocyclische Diolreste, die sich beispielsweise von 1,3- oder 1,4-Cyclohexandiol oder 1,4-Cyclohexandimethanol ableiten.

Die Polyester der Formeln I bis III zeichnen sich in der Regel durch eine besonders niedrige Viskosität aus, was die Verarbeitung der erfindungsgemässen Zusammensetzen sehr erleichtert.

Die Polyester der Formeln I bis III besitzen in der Regel Erweichungspunkte von weniger als 30°C und sind vorzugsweise bei 25°C flüssig. Sie lassen sich also ohne Schwierigkeiten in die betreffenden Epoxidharze einarbeiten und ergeben dann Mischugnen mit einer relativ niedrigen Viskosität.

Die Polyester besitzen vorzugsweise eine Viskosität von weniger als 80'000, insbesondere weniger als 30'000 mPas (gemessen bei 25°C mit dem Epprecht-Viskosimeter).

Die flexibilisierende Wirkung der Polyester der Formeln I bis III wird in starkem masse durch die Zahl der reaktiven Endgruppen und die Art der flexibilisierenden Polyalkylenglykolsegmente bestimmt.

In der Praxis haben sich insbesondere carboxyl-terminierte Polyester mit einer Säurezahl von weniger als 2,0 mAequ./g, besonders bevorzugt einer Säurezahl von 0,5—1,5 mAequ./g, bewährt.

Bevorzugt werden Zusammensetzungen, wie oben definiert, mit Viskositäten von weniger als 50'000 mPas, besonders von weniger als 20'000 mPas und ganz besonders von weniger als 15'000 mPas (gemessen bei 25°C mit dem Epprecht-Viskosimeter).

Bevorzugt beziehen sich diese Viskositätsangaben auf Mischungen enthaltend 1:1 (Gewichtsteile) Mischungen von Polyestern I, II oder III und Bisphenol-A-diglycidylether.

Die Indizes m und n nehmen vorzugsweise gleiche Werte an; sie sind besonders bevorzugt 1.

Der Index p ist vorzugsweise 3.

Der Index x bestimmt die Länge der Polyoxyalkylenkette; x ist vorzugsweise eine ganze Zahl von 8 bis 40 und ganz besonders bevorzugt eine ganze Zahl von 10 bis 30. Das Molekulargewicht (Zahlenmittel) der Polypropylenglykol- bzw. der Polybutylenglykoleinheiten liegt vorzugsweise zwischen 600 und 2500.

Der Index y bestimmt die Länge der Polyesterkette; y ist vorzugsweise eine ganze Zahl von 2 bis 6 und ganz besonders bevorzugt 2 oder 3.

Der Index q bestimmt die Länge des Alkylenrestes in der Polyalkylenglykolgruppe; q ist bevorzugt 4.

Ganz besonders bevorzugt werden Zusammensetzungen, wie oben definiert, worin Komponente b) aus Verbindungen der Formel I oder II besteht.

Ganz besonders bevorzugt man Zusammensetzungen enthaltend Polyester der Formeln I oder II, worin

alle Reste $R^1$ oder $R^3$ sich von Dimerfettsäure(n) oder, im Falle von $R^1$, auch von Trimerfettsäure(n) ableiten und wobei vorzugsweise alle Reste $R^2$ sich von Polybutylenglykol ableiten.

Durch Kombination von hydrophoben Dimer- oder Trimerfettsäureresten mit hydrophilen Polyalkylenoxidresten in einem Molekül gelingt es, einen flexibilisierend wirkenden Epoxidzusatz mit geringer Wasseraufnahme bereitzustellen. Diese Kombination von an sich gegenläufigen Eigenschaften ist äusserst wünschenswert, da mit Mischungen enthaltend diese Polyester korrosionsfeste Klebstoffe oder Giesskörper mit hoher Formbeständikeit hergestellt werden können. Vorbekannte Epoxidflexibilisatoren auf Polyalkylenoxidbasis nehmen aufgrund ihrer polaren Struktur relativ viel Wasser auf; dies führt in der Regel zu Quellungserscheinungen und zur Abnahme der Korrosionsfestigkeit.

Bevorzugt ist auch eine Zusammensetzung enthaltend 1—50 Gew.%, bezogen auf die Gesamtmischung, Polyester der Formel I, II oder III.

Ganz besonders bevorzugt werden Zusammensetzungen enthaltend Polyester der Formeln I oder II, worin mindestens 70 Gew.%, bevorzugt alle, Reste $R^1$ oder $R^3$ sich von Dimerfettsäure(n) oder, im Falle von $R^1$, auch von Trimerfettsäure(n), ableiten, alle Reste $R^2$ eine Gruppe der Formel

$$-\!\!\left(CH(CH_3)-CH_2-O\right)_{\overline{x}}CH(CH_3)-CH_2-$$

oder bevorzugt

$$-\!\!\left(CH_2-CH_2-CH_2-CH_2-O\right)_{\overline{x}}CH_2-CH_2-CH_2-CH_2-$$

sind, x eine ganze Zahl von 10—30 bedeutet und y eine ganze Zahl von 2—6, bevorzugt von 2 bis 3, ist.

Die Herstellung der Polyester der Formeln I, II oder III erfolgt in an sich bekannter Weise durch Polykondensation von

a) einem molaren Anteil Diol mit zwei molaren Anteilen Polycarbonsäure(anhydrid) (Polyester I),

b) einem molaren Anteil Diol mit ein bis zu zwei molaren Anteilen Poycarbonsäure(anhydrid) (Polyester II), oder

c) einem molaren Anteil eine drei- oder vierwertigen Carbonsäure mit drei oder vier molaren Anteilen Diol und anschliessendem Verkappen der Engruppen mit drei oder vier molaren Anteilen Polycarbonsäure(anhydrid) (Polyester III).

Man kann auch einen hydroxyl-terminierten Polyester durch Kondensation der entsprechenden molaren Mengen Diol und Polycarbonsäure(anhydrid) herstellen und diesen anschliessend in einer weiteren Stufe durch Umsetzung mit einem weiteren Polycarbonsäure(anhydrid) verkappen.

Selbstverständlich lassen sich auch Gemische von Diol- und/oder Polycarbonsäurekomponenten polykondensieren.

Anstelle der Polycarbonsäure(anhydride) kann man auch die entsprechende polyesterbildenden Carbonsäurederivate, beispielsweise die Ester oder die Säurechloride, einsetzen.

Die Ausgangsprodukte sind allgemein bekannt und teilweise im Handel erhältlich.

Die Polyesterharze können durch allgemeine Arbeitsweisen, die bei der Herstellung solcher Harze Anwendung finden, hergestellt werden. So kann man zweckmässigerweise die Veresterung durch Schmelzkondensation der Carbonsäurekomponente(n) und des Diols durchführen. Die Reaktionsteilnehmer werden dabei beispielsweise unter Rühren bis zu einer Temperatur von 240°C erhitzt. Dabei kann es sich anbieten, ein inertes Gas, wie beispielsweise Stickstoff, durch die Reaktionsmischung zu leiten, um das während der Veresterungsreaktion gebildete Wasser oder den niedrigen Alkohol, wenn ein Ester als funktionalisiertes Crbonsäurederivat eingesetzt wurde, zu entfernen. Auch kan am Ende der Veresterungsreaktion gegebenenfalls ein leichtes Vakuum angelegt werden, um restliche niedermolekulare Spaltprodukte zu isolieren. Der bevorzugte Temperaturbereich der Schmelzkondensation beträgt 160—200°C. Man kann aber auch andere Formen der Polykondensation anwenden, beispielsweise die Grenzflächenpolykondensation, die Polykondensation in Lösung, in Suspension oder in Masse.

Die Epoxidmischungen enthaltend die Polyester der Formel I, II oder III werden vorzugsweise in Form von Addukten eingesetzt. Dazu wird der betreffende Polyester in an sich bekannter Weise zusammen mit dem Epoxidharz und gegebenenfalls einem geeigneten Katalysator erhitzt, so dass ein schmelzbares aber noch härtbares Vorkondensat entsteht. Als Katalysator verwendet man beispielsweise Triphenylphosphin, tertiäre Amine, quaternäre Amoniumsalze und ganz besondes bevorzugt Chrom-Acetylacetonat.

Die Mengen der Polyester- und der Epoxidkomponente wählt man in der Regel so, dass auf eine freie Säure- oder phenolische Hydroxylgruppe des Polyesters mindestens zwei 1,2-Epoxidgruppen des Epoxidharzes entfallen. Die Menge an Katalysator beträgt in der Regel 0,1—5,0 Gew.%, bezogen auf die Gesamtmischung.

In der Regel wird die Viskosität des Adduktes grösser sein, als die Viskosität der Einzelkomponente. Man beobachtet jedoch auch Fälle, in denen die Viskosität des Adduktes geringer ist als die Viskosität der Einzelkomponente mit dem grössten Wert; dies ist in der Regel der Polyester.

Besonders bevorzugt setzt man Addukte aus den Polyestern der Formeln I, II oder III mit Diglycidylethern von 2,2-Bis-(4-hydroxyphenyl)-propan oder mit vorverlängerten Typen auf Basis von 2,2-Bis-(4-hydroxy)-propandiglycidylether und 2,2-Bis-(4-hydroxyphenyl)-propan (Festharze auf Bisphenol-A Basis) ein.

Den Addukten von Polyestern der Formeln I, II oder III an Festharze auf Bisphenol-A Basis wird vorzugsweise zur Herabsetzung der Viskosität der Mischung Diglycidylether von 2,2-Bis-(4-hydroxyphenyl)-propan zugesetzt.

Die Adduktbildung wird bevorzugt bei Epoxidmischungen enthaltend carboxyl-terminierte Polyester vorgenommen, um die Lagerstabilität des Gemisches zu vergrössern.

Die Erfindung betrifft auch ein schmelzbares abe noch härtbares Vorkondensat erhältlich durch Erhitzen der Zusammensetzung, wie oben definiert, in an sich bekannter Weise.

Die Mengen des Epoxidharzes a) und des Polyesters b) der erfindungsgemässen Zusammensetzungen werden vorzugsweise so gewählt, dass das Verhältnis der Carboxyläquivalente des Polyesters b) zu den Epoxidäquivalenten des Epoxidharzes a) zwischen 0,05 und 1,0, vorzugsweise 0,1 und 0,8, liegt. Ganz besonders bevorzugt werden Zusammensetzungen enthaltend 1—50 Gew.%, besonders 5—25 Gew.%, Polyester der Formel I, II oder III, bezogen auf die Gesamtmischung.

Die Härtung wird bei höheren Temperaturen vorgenommen. Im allgemeinen liegen die Härtungstemperaturen zwischen 80 und 250°C, bevorzugt zwischen 100 und 180°C. Die Härtung kann gewünschtenfalls auch in zwei Stufen vorgenommen werden, indem man z.B. den Härtungsvorgang unterbricht oder die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmache, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittel Antioxidantien und Lichtschutzmittel enthalten.

Die erfindungsgemässen Gemische finden z.B. Anwendung als Klebstoffe oder zur Herstellung von gehärteten Produkten, wie Verbundwerkstoffen und Laminaten. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze Matrixharze und Klebemittel verwendet werden.

Die Erfindung betrifft auch die Verwendung der Polyester der Formlen I, II oder III als Flexibilisatoren für Epoxidharze.

Ferner betrifft die Erfindung die Verwendung von Zusammensetzungen enthaltend Epoxidharze und Polyester der Formeln I, II und III mit mindestens 70 Gew.% der Reste $R^1$ oder $R^3$, bezogen auf die Gesamtmenge dieser Reste, an Dimer- oder, im Falle von $R^1$, auch Trimerfettsäure(n) oder von Addukten aus Epoxidharzen und besagten Polyestern als Klebstoff, insbesondere zur Verklebung von öligem Stahl.

Die folgenden Beispiele erläutern die Erfindung näher.

A) Allgemeine Arbeitsvorschrift für die Polyesterherstellung

Typ I: 1 Mol des dihydroxyterminierten Polyalkylkenoxids wird mit 2 Mol einer Dicarbonsäure 4 Stunden bei 200°C und zur Vervollständigung der Kondensation eine weitere Stunde bei 150 mbar erhitzt.

Typ II: 1 Mol des dihydroxyterminierten Polyalkylenoxids wird mit 2 Mol einer Tricarbonsäure 4 Stunden bei 200°C und eine Stunde bei 200°C und 150 mbar erhitzt.

Typ III: 1 Mol des dihydroxyterminierten Polyalkylenoxids wird mit einer Menge ⟨2Mol einer Dicarbonsäure 4 Stunden bei 200°C und eine Stunde bei 200°C/150 mbar kondensiert.

Die hergestellten Polyester und 1:1 (Gewicht) Mischungen dieser Polyester mit Diglycidylether auf Bisphenol-A-Basis (BPDG; Epoxidwert: 5,4 Aequ./kg) sind in der folgenden Tabelle zusammengefasst:

Tabelle 1 Carboxy- und phenol-terminierte Polyester

| Bsp. Nr. | Typ | Zusammensetzung 3), 4), 5) | Endgruppe | Säurezahl (Aeq/KG) | $M_n$ 1) | $M_w/M_n$ 1) | Viskos. $\eta_{25}$ 2) (mPas) | 1:1 Mischung mit BPDG $\eta_{25}$ 2) (mPas) |
|---|---|---|---|---|---|---|---|---|
| 1 | III | 1,5M PolyTHF 650<br>2M Pripol® 1013 | -COOH | 0,65 | 3350 | 2,6 | 19520 | 13120 |
| 2 | I | 1M PolyTHF 650<br>2M Pripol® 1013 | -COOH | 1,13 | 2320 | 2,3 | 8970 | 10880 |

1) Bestimmt mittels Gel-Permeationschromatographie
2) Gemessen mit dem Epprecht-Viskosimeter
3) PolyTHF bedeutet $HO-[(CH_2)_4-O]_n-H$; die Zahlenangaben betreffen die mittleren Molekulargewichte (Zahlenmittel)
4) Pripol® 1013 = Dimerfettsäure
Pripol® 1040 = Trimerfettsäure
Pripol® 1017 = } Gemisch von Dimer-
Pripol® 1022 = } und Trimerfettsäure
5) PPG bedeutet $HO-[C(CH_3)-CH_2-O]_n-H$; die Zahlenangaben betreffen die mittleren Molekulargewichte (Zahlenmittel)

Tabelle 1 (Fortsetzung)

| Bsp. Nr. | Typ | Zusammensetzung 3), 4, 5) | Endgruppe | Säure-zahl (Aeq/KG) | $M_n$ 1) | $M_w/M_n$ 1) | Viskos. $\eta_{25}$ 2) (mPas) | 1:1 Mischung mit BPDG $\eta_{25}$ 2) (mPas) |
|---|---|---|---|---|---|---|---|---|
| 3 | I/II | 1M PolyTHF 1000<br>2M Pripol® 1022 | -COOH | 0,85 | 2960 | 3,5 | 22400 | 14720 |
| 4 | I | 2M Pripol® 1013<br>1M PolyTHF 1000 | -COOH | 1,11 | 2300 | 2,9 | 16960 | 12480 |
| 5 | II | 2M Pripol® 1040<br>1M PolyTHF 1000 | -COOH | 1,48 | 3100 | 3,2 | 64000 | 32640 |
| 6 | I/II | 1M Pripol® 1017<br>0,5M PolyTHF 1000 | -COOH | 1,12 | 2600 | 2,8 | 15700 | 12480 |
| 7 | II | 1M Pripol® 1040<br>0,5M PolyTHF 2000 | -COOH | 1,07 | 4000 | 4,3 | 110080 | 44800 |
| 8 | III | 0,8M Pripol® 1017<br>0,58M PolyTHF 1000 | -COOH | 0,76 | 2980 | 2,6 | 12800 | 14080 |
| 9 | I/II | 1M Pripol® 1017<br>0,5M PPG 2000 | -COOH | 1,5 | 2240 | 2,1 | 3200 | 5520 |
| 10 | I/II | 2M Pripol® 1017<br>1M PPG 1000 | -COOH | 1,25 | 2130 | 2,2 | 6480 | 8960 |
| 11 | I/II | 2M Pripol® 1017<br>1M PolyTHF 1000 | -COOH | 1,07 | 2280 | 2,9 | 23680 | 17920 |

Tabelle 1 (Fortsetzung)

| Bsp. Nr. | Typ | Zusammensetzung 3), 4, 5) | Endgruppe | Säure-zahl (Aeq/KG) | $M_n$ 1) | $M_w/M_n$ 1) | Viskos. $\eta_{25}$ 2) (mPas) | 1:1 Mischung mit BPDG $\eta_{25}$ 2) (mPas) |
|---|---|---|---|---|---|---|---|---|
| 12 | II | 0,5M PPG 2000<br>1M Pripol® 1040 | -COOH | 1,02 | 2860 | 2,3 | 12960 | 10240 |
| 13 | I/II | 2M Pripol® 1017<br>1M PolyTHF 1000 | -COOH | 1,13 | 2240 | 3,2 | 16300 | 12600 |
| 14 | II | 2M Pripol® 1040<br>1M PolyTHF 1000 | -COOH | 0,75 | 1260 | 11,3 | 8960 | 23360 |
| 15 | II | 1M Pripol® 1040<br>0.5M PPG 2000 | -COOH | 0,88 | 4140 | 3,3 | 26800 | 9900 |

B) Beispiele Addukte

Bisphenol-A-Diglycidether (BPDG) mit einem Epoxidgehalt von 5,4 Mol/Kg wird mit den carboxyterminierten Polyestern 1 Stunde bei 120°C in Gegenwart von 0,25% Triphenylphosphin-Katalysator umgesetzt. Die hergestellten Addukte sind in der folgenden Tabelle zusmmengefasst:

| Bsp. Nr. | Polyester aus Bsp. Nr. | BPDG/Polyest. (Gew./Gew.) | Epoxidgehalt (Aeq/kG) | Viskosität (mPas, 25°C) |
|---|---|---|---|---|
| 16 | 1 | 50/50 | 2,3 | 37210 |
| 17 | 8 | 60/40 | 2,2 | 19840 |

C) Anwendungsbeispiele: Verklebungen von Stahl- und Aluminiumblechen

C1) Auf einem Dreiwalzenstuhl werden 16,6 g des in Beispiel 16 beschriebenen Adduktes mit 100 g Bisphenol-A-diglycidether (5,4 Aeq. Epoxid/kg), 7,57 g Dicyandiamid, 2,27 g Chlortoluron und 1,0 g pyrogener Kieselsäure gemischt. Man erhält eine Mischugn mit 16640 mPa.s (cP) Viskosität bei 25°C gemessen mit einem Epprecht-Viskosimeter und den folgenden charakteristischen Daten.

3,5 Minuten Gelierzeit bei 160°C gemessen auf einer Gelierzeitplatte.

27,3 N/mm$^2$ Zugscherfestigkeit bei Verkleben von entfetteten sandgestrahlten 1,5 mm starken Aluminiumprüfkörpern (30 Minuten bei 160°C gehärtet)

19,6 N/mm$^2$ Zugscherfestigkeit auf entfetteten 1,5 mm starken Stahlprüfkörpern (30 Minuten bei 160°C gehärtet)

115°C Glasübergangstemperatur gemessen mittels dynamischer mechanischer Spektroskopie[1] an einem Prepreg, hergestellt durch Handlaminierung der Klebstoffmischung auf Glasgewebe (CS 7628) und 30 Minuten Härtung bei 180°C unter 15 bar Druck.

C2) Auf einem Dreiwalzenstuhl werden 16,6 g des in Beispiel 16 beschriebenen Adduktes mit 100 g Bisphenol-A-diglycidether (5,4 Aeq. Epoxid/kg), 7,57 g Dicyandiamid, 2,27 g Chlortoluron und 8,0 g pyrogener Kieselsäure gemischt und auf entfettete Aluminiumstreifen aufgetragen, die zuvor 30 Minuten bei 65°C mit einer Waschlösung bestehend aus 40 l deionisiertem Wasser/7,55 1 konz. Schwefelsäure (d = 1,88)/2,5 kg Chromsäure/3,0 g Kupferspäne behandelt und 15 Minuten mit deionisiertem Wasser gespült wurden. Nach 30 Minuten Härtung bei 180°C unter 30 bar Druck bestimmt man den Rollenschälwert zu 9,2 kN/m.

C3) Die in Beispiel C1) beschriebene Klebemischung wird zum Verkleben von entfetteten 1 mm-starken Stahlprüfkörpern verwendet. Einige dieser so erhaltenen Prüfkörper werden 7 Tage bei 71°C in deionisiertem Wasser gelagert. Andere Prüfkörper werden drei Wochen abwechselnd 24 Stunden in Salzspray (50 g NaCl/1 deionisiertem Wasser) bei 35°C, dann 96 Stunden im Schwitzwasser bei 40°C und 100% Luftfeuchtigkeit und schliesslich 48 Stunden bei Raumtemperatur gelagert.

Man bestimmt die folgenden Zugscherfestigkeiten:

19,6 N/mm$^2$ Ausgasngs-Zugscheferstigkeit

15,0 N/mm$^2$ 7 Tage Wasserlagerung bei 71°C

12,3 N/mm$^2$ 3 Wochen Salzspray/Schwitzwasser

C4) Auf einem Dreiwalzenstuhl werden 100 g Bisphenol A-diglycidylether (5,4 Aeq. Epoxid/kg), 60 g des in Beispiel 16 beschriebenen Addukts, 7,57 g Dicyandiamid, 2,27 g Chlortoluron und 8,0 g pyrogene Kieselsäure vermischt. Dann trägt man mittels Filmziehrahmen eine 300 µm dicke Schicht auf ein 1 mm dickes Stahlblech auf und härtet 30 Minuten bei 180°C. Dann biegt man bei Raumtemperatur und bei −40°C über einen Dorn mit 4 cm Durchmesser. Bei beiden Temperaturen tritt keine Rissbildung auf.

C5) In einem Kneter werden 61 g eines bei 120°C/2 h in Gegenwart von 0,13 g Triphenylphosphin hergestellten Addukts aus 25 g eines Polyesters gemäss Beispiel 6 und 36 g eines Epoxidharzes auf Bisphenol-A Basis (2,15—2,22 Aequ. Epoxid/kg) mit 15,2 g $CaSiO_3$, 15,2 g $Mg_3[(OH)_2/Si_4O_{10}]$, 0,6 g Glycidyloxypropyltrimethoxysilan, 1,6 g Dicyandiamid, 0,5 g Chlortoluron, 2,4 g Epoxidharz auf Bisphenol-A Basis (2,15—2,22 Aequ. Epoxid/kg) und 3,5 g pyrogener Kieselsäure vermischt.

Diese Klebstoffmischung wird zum Verkleben von beölten 1 mm-dicken Stahlprüfkörpern verwendet. Die Vorbehandlung der Bleche wird wie folgt durchgeführt: Die Bleche werden mit Aceton gereinigt, in

[1] Gemessen mit einem Du Pont 9900 Gerät

eine Lösung von 5 g Korrosionsschutzöl (P80-Oel de Fa. Pfindlers Nachf.) und 95 g Heptan getaucht und 16 h bei 50°C getrocknet.

Die Härtung erfolgt bei 180°C/30 min.

Die verklebten Prüfkörper werden 12 Wochen bei 70°C/90% Luftfeuchtigkeit und dann 2 h bei −20°C gelagert.

Ausserdem werden die verklebten Prüfkörper 480 h in Salzspray (50 g NaCl/l deionisiertes Wasser) gelagert.

Ausgangszugscherfestigkeit auf öligem Stahl: 6,5 N/mm$^2$.

Zugscherfestigkeit nach Lagerung im Klimawechseltest: 4,5 N-mm$^2$.

Zugscherfestigkeit nach Lagerung im Salzspraytest: 4,5 N/mm$^2$.

**Patentansprüche für die Vertragsstaaten: BE CH DE FR GB IT LI NL SE**

1. Zusmmensetung enthaltend

a) mindestens eine Verbindung mit mindestens einer 1,2-Epoxidgruppe im Molekül,

b) mindestens eine Verbindung der Formeln I, II oder III

$$(HO-\overset{O}{\overset{\|}{C}})_m-R^1-\overset{O}{\overset{\|}{C}}-O-R^2-O-\overset{O}{\overset{\|}{C}}-R^1-(\overset{O}{\overset{\|}{C}}-OH)_n \quad (I),$$

$$HO-[\overset{O}{\overset{\|}{C}}-R^3-\overset{O}{\overset{\|}{C}}-O-R^2-O]_y-\overset{O}{\overset{\|}{C}}-R^3-\overset{O}{\overset{\|}{C}}-OH \quad (II),$$

$$R^4-[\overset{O}{\overset{\|}{C}}-O-R^2-O-\overset{O}{\overset{\|}{C}}-R^1-(\overset{O}{\overset{\|}{C}}-OH)_m]_p \quad (III),$$

worin m und n unabhängig voneinander 1 oder 2 sind, y eine ganze Zahl von 2 bis 10 ist, p 3 oder 4 bedeutet,

$R^1$, $R^3$ und $R^4$ sich von Resten aliphatischer, cycloaliphatischer oder aromatischer Carbonsäuren ableiten, wobei $R^1$ ein zwei- oder dreiwertiger Rest, $R^3$ ein zweiwertiger Rest und $R^4$ ein drei- oder vierwertiger Rest nach dem Entfernen der Carboxylgruppen ist, und $R^2$ der Rest eines aliphatischen oder cycloaliphatischen Diols nach dem Entfernen der beiden Hydroxylgruppen ist, und

c) Dicyandiamid als Härter mit der Massgabe, dass mindestens 70 Gew.% der Reste $R^1$ oder $R^3$, bezogen auf die Gesamtmenge dieser Reste, sich von Dimer- und/oder Trimerfettsäuren ableiten, dass mindestens 70 Gew.% der Reste $R^2$, bezogen auf die Gesamtmenge dieser Reste, Gruppen der Formel V sind

$$-(C_qH_{2q}-O)_x-C_qH_{2q}- \quad (V),$$

worin x eine ganze Zahl von 5 bis 40 ist und q 3 oder 4 bedeutet oder bis zu 30 Gew.% innerhalb eines Restes der Formel V auch Gruppen mit q = 2 sein können, und dass die Reste $R^1$, $R^2$ und $R^3$ und die Indizes x und qu in einem Molekül innerhalb der gegebenen Definitionen unterschiedlich sein können.

2. Zusammensetzung gemäss Anspruch 1, worin Komponente a) ein Polyglycidylether von Bisphenolen, von Novolaken oder von aliphatischen Diolen ist.

3. Zusammensetzung gemäss Anspruch 1 mit einer Viskosität von weniger als 50,000 mPas (gemessen bei 25°C mit dem Epprecht-Viskosimeter).

4. Zusammensetzung gemäss Anspruch 1, worin die Indizes m und n jeweils gleiche Werte annehmen.

5. Zusammensetzung gemäss Anspruch 1, worin x eine ganze Zahl von 8 bis 40 ist.

6. Zusammensetzung gemäss Anspruch 1, worin y eine ganze Zahl von 2 bis 6 ist.

7. Zusammensetzung gemäss Anspruch 1, worin q 4 bedeutet.

8. Zusammensetzung gemäss Anspruch 1, worin Komponente b) aus Verbindungen der Formel I oder II besteht.

9. Zusammensetzung gemäss Anspruch 1, worin alle Reste $R^1$ oder $R^3$ sich von Dimerfettsäure(n) im Falle von $R^1$, auch von Trimerfettsäure(n) ableiten.

10. Zusammenswetzung gemäss Anspruch 1, worin alle Reste $R^2$ eine Gruppe der Formel $-(CH(CH_3)-CH_2-O)_xCH(CH_3)-CH_2-$ oder $-(CH_2-CH_2-CH_2-CH_2-O)_xCH_2-CH_2-CH_2-CH_2-$ sind, x eine ganze Zahl von 10—30 bedeutet und y eine ganze Zahl von 2—6 ist.

11. Zusammensetzung gemäss Anspruch 8, worin alle Reste $R^1$ oder $R^3$ sich von Dimerfettsäure(n) oder im Falle von $R^1$, und von Trimerfettsüre(n) ableiten und alle Reste $R^2$ sich von Polybutylenglykol ableiten.

12. Zusammensetzung gemäss Anspruch 1 enthaltend 1—50 Gew.%, bezogen auf die Gesamtmischung, Polyester der Formel I, II oder III.

13. Schmelzbares aber noch härtbares Vorkondensat erhältlich durch Erhitzen der Zusammensetzung gemäss Anspruch 1 in an sich bekannter Weise.

14. Verfahren zur Herstellung gehärteter Produkte, dadurch gekennzeichnet, dass man eine Zusammensetzung enthaltend Komponenten a), b) und c) gemäss Anspruch 1 in an sich bekannten Weise härtet.

15. Verwendung der Zusammensetzung enthaltend a) Epoxidharze und b) Polyester der Formeln I, II und/oder III gemäss Anspruch 1 als Klebstoff.

16. Verwendung eines Adduktes aus a) Epoxidharzen und b) Polyester der Formeln I, II und/oder III gemäss Anspruch 1 als Klebstoff.

**Patentansprüche für den Vertragsstaat: ES**

1. Zusmmensetung enthaltend
a) mindestens eine Verbindung mit mindestens einer 1,2-Epoxidgruppe im Molekül,
b) mindestens eine Verbindung der Formeln I, II oder III

$$(HO-\overset{O}{\overset{\|}{C}})_m-R^1-\overset{O}{\overset{\|}{C}}-O-R^2-O-\overset{O}{\overset{\|}{C}}-R^1-(\overset{O}{\overset{\|}{C}}-OH)_n \qquad (I),$$

$$HO-\left[\overset{O}{\overset{\|}{C}}-R^3-\overset{O}{\overset{\|}{C}}-O-R^2-O\right]_y-\overset{O}{\overset{\|}{C}}-R^3-\overset{O}{\overset{\|}{C}}-OH \qquad (II),$$

$$R^4-\left[\overset{O}{\overset{\|}{C}}-O-R^2-O-\overset{O}{\overset{\|}{C}}-R^1-(\overset{O}{\overset{\|}{C}}-OH)_m\right]_p \qquad (III),$$

worin m und n unabhängig voneinander 1 oder 2 sind, y eine ganze Zahl von 2 bis 10 ist, p 3 oder 4 bedeutet,

$R^1$, $R^3$ und $R^4$ sich von Resten aliphatischer, cycloaliphatischer oder aromatische Carbonsäuren ableiten, wobei $R^1$ ein zwei- oder dreiwertiger Rest, $R^3$ ein zweiwertiger Rest und $R^4$ ein drei- oder vierwertiger Rest nach dem Entfernen der Carboxylgruppen ist, und $R^2$ der Rest eines aliphatischen oder cycloaliphatischen Diols nach dem Entfernen der beiden Hydroxylgruppen ist, und

c) Dicyandiamid als Härter mit der Massgabe, dass mindestens 70 Gew.% der Reste $R^1$ oder $R^3$, bezogen auf die Gesamtmenge dieser Reste, sich von Dimer- und/oder Trimerfettsäuren ableiten, dass mindestens 70 Gew.% der Reste $R^2$, bezogen auf die Gesamtmenge dieser Reste, Gruppen der Formel V sind

$$-(C_qH_{2q}-O)_x-C_qH_{2q}- \qquad (V),$$

worin x eine ganze Zahl von 5 bis 40 ist und q 3 oder 4 bedeutet oder bis zu 30 Gew.% innerhalb eines Restes der Formel V auch Gruppen mit q = 2 sein können, und dass die Reste $R^1$, $R^2$ und $R^3$ und die Indizes x und q in einem Molekül innerhalb der gegebenen Definitionen unterschiedlich sein können.

2. Zusammensetzung gemäss Anspruch 1, worin Komponente a) ein Polyglycidylether von Bisphenolen, von Novolaken oder von aliphatischen Diolen ist.

3. Zusammensetzung gemäss Anspruch 1 mit einer Viskosität von weniger als 50,000 mPas (gemessen bei 25°C mit dem Epprecht-Viskosimeter).

4. Zusammensetzung gemäss Anspruch 1, worin die Indizes m und n jeweils gleiche Werte annehmen.

5. Zusammensetzung gemäss Anspruch 1, worin x eine ganze Zahl von 8 bis 40 ist.

6. Zusammensetzung gemäss Anspruch 1, worin y eine ganze Zahl von 2 bis 6 ist.

7. Zusammensetzung gemäss Anspruch 1, worin q 4 bedeutet.

8. Zusammensetzung gemäss Anspruch 1, worin Komponente b) aus Verbindungen der Formel I oder II besteht.

9. Zusammensetzung gemäss Anspruch 1, worin alle Reste $R^1$ oder $R^3$ sich von Dimerfettsäure(n) im Falle von $R^1$, auch von Trimerfettsäure(n) ableiten.

10. Zusammensetzung gemäss Anspruch 1, worin alle Reste $R^2$ eine Gruppe der Formel $-(CH(CH_3)-CH_2-O)_xCH(CH_3)-CH_2-$ oder $-(CH_2-CH_2-CH_2-CH_2-O)_xCH_2-CH_2-CH_2-CH_2-$ sind, x eine ganze Zahl von 10—30 bedeutet und y eine ganze Zahl von 2—6 ist.

11. Zusammensetzung gemäss Anspruch 8, worin alle Reste $R^1$ oder $R^3$ sich von Dimerfettsäure(n) oder

im Falle von $R^1$, und von Trimerfettsüre(n) ableiten und alle Reste $R^2$ sich von Polybutylenglykol ableiten.

12. Zusammensetzung gemäss Anspruch 1 enthaltend 1—50 Gew.%, bezogen auf die Gesamtmischung, Polyester der Formel I, II oder III.

13. Verfahren zur Herstellung gehärteter Produkte, dadurch gekennzeichnet, dass man eine Zusammensetzung enthaltend Komponenten a), b) und c) gemäss Anspruch 1 in an sich bekannter Weise härtet.

14. Verfahren zur Herstellung eines schmelzbaren aber noch härtbaren Vorkondensats, dadurch gekenzeichnet, dass man eine Zusammensetzung gemäss Anspruch 1 in an sich bekannten Weise erhitzt.

15. Verwendung der Zusammensetzung enthaltend a) Epoxidharze und b) Polyester der Formeln I, II und/oder III gemäss Anspruch 1 als Klebstoff.

16. Verwendung eines Adduktes aus a) Epoxidharzen und b) Polyester der Formeln I, II und/oder III gemäss Anspruch 1 als Klebstoff.

**Revendications pour les Etats Contractants: BE CH DE FR GB IT LI SE**

1. Composition contenant:

a) au moins un composé contenant dans sa molécule au moins un groupe époxyde-1,2;

b) au moins un composé répondant aux formules I, II ou III:

$$(HO-\overset{O}{\overset{\|}{C}})_m-R^1-\overset{O}{\overset{\|}{C}}-O-R^2-O-\overset{O}{\overset{\|}{C}}-R^1-(\overset{O}{\overset{\|}{C}}-OH)_n \qquad (I),$$

$$HO-\left[\overset{O}{\overset{\|}{C}}-R^3-\overset{O}{\overset{\|}{C}}-O-R^2-O\right]_y\overset{O}{\overset{\|}{C}}-R^3-\overset{O}{\overset{\|}{C}}-OH \qquad (II),$$

$$R^4-\left[\overset{O}{\overset{\|}{C}}-O-R^2-O-\overset{O}{\overset{\|}{C}}-R^1-(\overset{O}{\overset{\|}{C}}-OH)_m\right]_p \qquad (III),$$

dans lesquelles m et n valent, indépendamment l'un de l'autre, 1 ou 2; y est un nombre entier valant 2 à 10, q vaut 3 ou 4;

$R^1$, $R^3$ et $R^4$ dérivent de restes d'acides carboxyliques aliphatiques, cycloaliphatiques ou aromatiques, $R^1$ représentant un reste divalent ou trivalent, $R^3$ représentant un reste divalent et $R^4$ représentant un reste trivalent ou tétravalent obtenu après l'enlèvement des groupes carboxyles, et

$R^2$ représente le reste d'un diol aliphatique ou cycloaliphatique, après enlèvement des deux groupes hydroxyles, et

c) du dicyanodiamide (ou cyanoguanidine) comme durcisseur,

à la condition qui' au mons 70% en poids des restes $R^1$ ou $R^3$, par rapport à la quantité totale de ces rests, dérivent d'acides gras dimérisés et/ou trimérisés; qu'au moins 70% en poids des restes $R^2$, par rapport à la quantité totale de ces restes, représentent des groupes de formule V:

$$-(C_qH_{2q}-O)_x-C_qH_{2q}- \qquad (V),$$

où x et un nombre entier valant 5 à 40 et q vaut 3 ou 4, ou bien que jusqu'à 30% en poids à l'intérieur d'un reste de formule V puisse également correspondre à des groupes dans lesquels vaut 2, et que les restes $R^1$, $R^2$, $R^3$ et $R^5$ et les indices x et q puissent, dans une même molécule, être différents tout en demeurant dans le cadre des définitions indiquées.

2. Composition selon la revendication 1, dans laquelle le composant a) est un éther-oxyde de polyglycidylique de bisphénols, de novolaques ou de diols aliphatiques.

3. Composition selon la revendication 1, ayant une viscosité inférieur à 50 000 mPa.s (mesurée à 25°C avec le viscosimètre Epprecht).

4. Composition selon la revendication 1, dans laquelle les indices m et n ont chaque fois des valeurs égales.

5. Composition selon la revendication 1, dans laquelle x représente un nombre entier valant de 8 à 40.

6. Composition selon la revendication 1, dans laquelle y est un nombre entier valant 2 à 6.

7. Composition selon la revendication 1, dans laquelle q vaut 4.

8. Composition selon la revendication 1, dans laquelle le composant b) consiste en des composés répondant aux formules I ou II.

9. Composition selon la revendication 1, dans laquelle tous les restes $R^1$ ou $R^3$ dérivent d'un ou plusieurs acides gras dimérisés ou, dans le cas de $R^1$, ces restes peuvent également dériver d'un ou plusieurs acides gras trimérisés.

10. Composition selon la revendication 1, dans laquelle tous les restes $R^2$ représentent un groupe de formule $-(CH(CH_3)-CH_2-O)_x CH(CH_3)-CH_2-$ ou $-(CH_2-CH_2-CH_2-CH_2-O)_x CH_2-CH_2-CH_2-CH_2-$; x est un nombre entier valant 10 à 30 et y est un nombre entier valant 23 à 6.

11. Composition selon la revendication 8, dans laquelle tous les restes $R^1$ ou $R^3$ dérivent d'un ou plusieurs acides gras dimérisés ou, dans le cas de $R^1$, ils peuvent dériver d'un ou plusieurs acides gras trimérisés, et tous les restes $R^2$ dérivent d'un polybutylène-glycol.

12. Composition selon la revendication 1, contenant 1 à 50% en poids, par rapport au mélange total, de polyesters répondant aux formules I, II ou III.

13. Précondensat fusible mais encore durcissable, que l'on peut obtenir en chauffant de façon connue en soi la composition selon la revendication 1.

14. Procédé pour préparer des produits durcis, cractérisé en ce qu'on fait durcir, de façon connue en soi, une composition contenant les composants a), b) et c) selon la revendication 1.

15. Utilisation de la composition contenant a) des résines époxydes et b) des polyesters répondant aux formules I, II et/ou III selon la revendication 1, à titre de colles ou d'adhésifs.

16. Utilisation d'un produit d'addition, ou adduit, de a) des résines époxydes ete b) des polyesters répondant aux formules I, II et/ou III selon la revendication 1, à titre de colle ou d'adhésif.

**Revendications pour les Etat Contractant: ES**

1. Composition contenant:

a) au moins un composé contenant dans sa molécule au moins un groupe époxyde-1,2;

b) au moins un composé répondant aux formules I, II ou III:

$$(HO-\overset{O}{\overset{\|}{C}})_m-R^1-\overset{O}{\overset{\|}{C}}-O-R^2-O-\overset{O}{\overset{\|}{C}}-R^1-(\overset{O}{\overset{\|}{C}}-OH)_n \qquad (I),$$

$$HO-[\overset{O}{\overset{\|}{C}}-R^3-\overset{O}{\overset{\|}{C}}-O-R^2-O]_y-\overset{O}{\overset{\|}{C}}-R^3-\overset{O}{\overset{\|}{C}}-OH \qquad (II),$$

$$R^4-[\overset{O}{\overset{\|}{C}}-O-R^2-O-\overset{O}{\overset{\|}{C}}-R^1-(\overset{O}{\overset{\|}{C}}-OH)_m]_p \qquad (III),$$

dans lesquelles m et n valent, indépendamment l'un de l'autre, 1 ou 2; y est un nombre entier valant 2 à 10, q vaut 3 ou 4;

$R^1$, $R^3$ et $R^4$ dérivent de restes d'acides carboxyliques aliphatiques, cycloaliphatiques ou aromatiques, $R^1$ représentant un reste divalent ou trivalent, $R^3$ représentant un reste divalent et $R^4$ représentant un reste trivalent ou tétravalent obtenu après l'enlèvement des groupes carboxyles, et

$R^2$ représente le reste d'un diol aliphatique ou cycloaliphatique, après enlèvement des deux groupes hydroxyles, et

c) du cicyanodiamide (ou cyanoguanidine) comme durcisseur,

à la condition qui' au mons 70% en poids des restes $R^1$ ou $R^3$, par rapport à la quantité totale de ces rests, dérivent d'acides gras dimérisés et/ou trimérisés; qu'au moins 70% en poids des restes $R^2$, par rapport à la quantité totale de ces restes, représentent des groupes de formule V:

$$-(C_qH_{2q}-O)_x-C_qH_{2q}- \qquad (V),$$

où x et un nombre entier valant 5 à 40 et q vaut 3 ou 4, ou bien que jusqu'à 30% en poids à l'intérieur d'un reste de formule V puisse également correspondre à des groupes dans lesquels vaut 2, et que les restes $R^1$, $R^2$, $R^3$ et $R^5$ et les indices x et q puissent, dans une même molécule, être différents tout en demeurant dans le cadre des définitions indiquées.

2. Composition selon la revendication 1, dans laquelle le composant a) est un éther-oxyde de polyglycidylique de bisphénols, de novolaques ou de diols aliphatiques.

3. Composition selon la revendication 1, ayant une viscosité inférieur à 50 000 mPa.s (mesurée à 25°C avec le viscosimètre Epprecht).

4. Composition selon la revendication 1, dans laquelle les indices m et n ont chaque fois des valeurs égales.

5. Composition selon la revendication 1, dans laquelle x représente un nombre entier valant de 8 à 40.

6. Composition selon la revendication 1, dans laquelle y est un nombre entier valant 2 à 6.

7. Composition selon la revendication 1, dans laquelle q vaut 4.

8. Composition selon la revendication 1, dans laquelle le composant b) consiste en des composés répondant aux formules I ou II.

9. Composition selon la revendication 1, dans laquelle tous les restes $R^1$ ou $R^3$ dérivent d'un ou plusieurs acides gras dimérisés ou, dans le cas de $R^1$, ces restes peuvent également dériver d'n ou plusieurs acides gras trimérisés.

10. Composition selon la revendication 1, dans laquelle tous les restes $R^2$ représentent un groupe de formule $-(CH(CH_3)-CH_2-O)_x-CH(CH_3)-CH_2-$ ou $-(CH_2-CH_2-CH_2-CH_2-O)_x-CH_2-CH_2-CH_2-CH_2-$; x est n nombre entier valant 10 à 30 et y et un nombre entier valant 2 à 6.

11. Composition selon la revendication 8, dans laquelle tous les restes $R^1$ ou $R^3$ dérivent d'un ou plusieurs acides gras dimérisés ou, dans le cas de $R^1$, ils peuvent dériver d'un ou plusieurs acides gras trimérisés, et tous les restes $R^2$ dérivent d'un polybutylène-glycol.

12. Composition selon la revendication 1, contenant 1 à 50% en poids, par rapport au mélane total, de polyesters répondant aux formules I, II ou III.

13. Procédé pour préparer des produits durcis, caractérise en ce qu'on fait durcir, de façon connue en soi, une composition contenant les composants a), b) et c) selon la revendication 1.

14. Procédé pour préparer un pré-condensat fusible mais encore durcissable, procédé caractérisé en ce qu'on chauffe de façon en soi une composition selon la revendication 1.

15. Utilisation de la composition contenant a) des résines époxydes et b) des polyesters répondant aux formules I, II et/ou III selon la revendication 1, à titre de colles ou d'adhésifs.

16. Utilisation d'un produit d'addition, ou adduit, de a) des résines époxydes et b) des polyesters répondant aux formules I, II et/ou III selon la revendication 1, à titre de colle ou d'adhésif.

**Claims for the Contracting States: BE CH DE FR GB IT LI SE**

1. A composition containing

a) at least one compound having at least one 1,2-epoxide group in its molecule

b) at least one compound of the formulae I, II or III

$$(HO-\overset{O}{\overset{\|}{C}})_m-R^1-\overset{O}{\overset{\|}{C}}-O-R^2-O-\overset{O}{\overset{\|}{C}}-R^1-(\overset{O}{\overset{\|}{C}}-OH)_n \qquad (I),$$

$$HO-[\overset{O}{\overset{\|}{C}}-R^3-\overset{O}{\overset{\|}{C}}-O-R^2-O]_y-\overset{O}{\overset{\|}{C}}-R^3-\overset{O}{\overset{\|}{C}}-OH \qquad (II),$$

$$R^4-[\overset{O}{\overset{\|}{C}}-O-R^2-O-\overset{O}{\overset{\|}{C}}-R^1-(\overset{O}{\overset{\|}{C}}-OH)_m]_p \qquad (III),$$

in which m and n independently of one another are 1 or 2, y is an integer from 2 to 10, p is 3 or 4, $R^1$, $R^3$ and $R^4$ are derived from radicals of aliphatic, cycloaliphatic or aromatic carboxylic acids, $R^1$ being a divalent or trivalent radical, $R^3$ being a divalent radical and $R^4$ being a trivalent or tetravalent radical, after the removal of the carboxyl groups, and $R^2$ is the radical of an aliphatic or cycloaliphatic diol after the removal of the two hydroxyl groups, and

c) dicyanodiamide as curing agent, subject to the proviso that at least 70% by weight of the radicals $R^1$ or $R^3$, relative to the total amount of these radicals, are derived from dimeric and/or trimeric fatty acids, that at least 70% by weight of the radicals $R^2$, relative to the total amount of these radicals, are groups of the formula V

$$-(C_qH_{2q}-O)_x-C_qH_{2q}- \qquad (V),$$

in which x is an integer from 5 to 40 and q is 3 or 4, or up to 30% by weight within a radical of formula V can also be groups in which q = 2, and that the radicals $R^1$, $R^2$, $R^3$ and $R^5$ and the indices x and q in a molecule can be different within the definition given.

2. A composition according to claim 1, wherein component a) is a polyglycidyl ether of bisphenols, novolaks or aliphatic diols.

3. A composition according to claim 1, having a viscosity less than 50,000 mPas (measured at 25°C using the Epprecht viscometer).

4. A composition according to claim 1, wherein the indices m and n have identical values in each case.

5. A composition according to claim 1, wherein x is an integer from 8 to 40.

6. A composition according to claim 1, wherein y is an integer from 2 to 6.

7. A composition according to claim 1, wherein q is 4.

8. A composition according to claim 1, wherein the component b) consists of compounds of the formula I or II.

9. A composition according to claim 1, wherein all the radicals $R^1$ or $R^3$ are derived from dimeric fatty acid(s) or, in the case of $R^1$, also from trimeric fatty acid(s).

10. A composition according to claim 1, wherein all the radicals $R^2$ are a group of the formula $-(CH(CH_3)-CH_2-O)_x CH(CH_3)-CH_2-$ or $-(CH_2-CH_2-CH_2-CH_2-O)_x CH_2-CH_2-CH_2-CH_2-$, x is an integer from 10 to 30 and y is an integer from 2 to 6.

11. A composition according to claim 8, wherein all the radicals $R^1$ or $R^3$ are derived from dimeric fatty acid(s) or, in the case of $R^1$, also from trimeric fatty acid(s), and all the radicals $R^2$ are derived from polybutylene glycol.

12. A composition according to claim 1, containing 1—50% by weight, relative to the total mixture, of polyesters of the formula I, II or III.

13. A meltable, but still curable, precondensate which can be obtained by heating the composition according to claim 1 in a manner known per se.

14. A process for the production of cured products which comprises curing a composition containing components a), b) and c) according to claim 1 in a manner known per se.

15. Use of the composition containing a) epoxide resins and b) polyesters of the formulae I, II and/or III according to claim 1 as an adhesive.

16. Use of an adduct formed from a) epoxide resins and b) polyesters of the formulae I, II and/or III according to claim 1 as an adhesive.

**Claims for the Contracting State: ES**

1. A composition containing

a) at least one compound having at least one 1,2-epoxide group in its molecule

b) at least one compound of the formulae I, II or III

$$(HO-\overset{O}{\overset{\|}{C}})_m R^1-\overset{O}{\overset{\|}{C}}-O-R^2-O-\overset{O}{\overset{\|}{C}}-R^1-(\overset{O}{\overset{\|}{C}}-OH)_n \qquad (I),$$

$$HO-[\overset{O}{\overset{\|}{C}}-R^3-\overset{O}{\overset{\|}{C}}-O-R^2-O]_y-\overset{O}{\overset{\|}{C}}-R^3-\overset{O}{\overset{\|}{C}}-OH \qquad (II),$$

$$R^4-[\overset{O}{\overset{\|}{C}}-O-R^2-O-\overset{O}{\overset{\|}{C}}-R^1-(\overset{O}{\overset{\|}{C}}-OH)_m]_p \qquad (III),$$

in which m and n independently of one another are 1 or 2, y is an integer from 2 to 10, p is 3 or 4, $R^1$, $R^3$ and $R^4$ are derived from radicals of aliphatic, cycloaliphatic or aromatic carboxylic acids, $R^1$ being a divalent or trivalent radical, $R^3$ being divalent radical and $R^4$ being a trivalent or tetravalent radical, after the removal of the carboxyl groups, and $R^2$ is the radical of an aliphatic or cycloaliphatic diol after the removal of the two hydroxyl groups, and

c) dicyanodiamide as curing agent, subject to the proviso that at least 70% by weight of the radicals $R^1$ or $R^3$, relative to the total amount of these radicals, are derived from dimeric and/or trimeric fatty acids, that at least 70% by weight of the radicals $R^2$, relative to the total amount of these radicals, are groups of the formula V

$$-(C_qH_{2q}-O)_x-C_qH_{2q}- \qquad (V),$$

in which x is an integer from 5 to 40 and q is 3 or 4, or up to 30% by weight within a radical of formula V can also be groups in which q = 2, and that the radicals $R^1$, $R^2$, $R^3$ and $R^5$ and the indices x and q in a molecule can be different within the definition given.

2. A composition according to claim 1, wherein component a) is a polyglycidyl ether of bisphenols, novolaks or aliphatic diols.

3. A composition according to claim 1, having a viscosity less than 50,000 mPas (measured at 25°C using the Epprecht viscometer).

4. A composition according to claim 1, wherein the indices m and n have identical values in each case.

5. A composition according to claim 1, wherein x is an integer from 8 to 40.

6. A composition according to claim 1, wherein y is an integer from 2 to 6.

7. A composition according to claim 1, wherein q is 4.

8. A composition according to claim 1, wherein the component b) consists of compounds of the formula I or II.

9. A composition according to claim 1, wherein all the radicals $R^1$ or $R^3$ are derived from dimeric fatty acid(s) or, in the case of $R^1$, also from trimeric fatty acid(s).

10. A composition according to claim 1, wherein all the radicals $R^2$ are a group of the formula $-(CH(CH_3)-CH_2-O)_x-CH(CH_3)-CH_2-$ or $-(CH_2-CH_2-CH_2-CH_2-O)_y-CH_2-CH_2-CH_2-CH_2-$, x is an integer from 10 to 30 and y is an integer from 2 to 6.

11. A composition according to claim 8, wherein all the radicals $R^1$ or $R^3$ are derived from dimeric fatty acid(s) or, in the case of $R^1$, also from trimeric fatty acid(s), and all the radicals $R^2$ are derived from polybutylene glycol.

12. A composition according to claim 1, containing 1—50% by weight, relative to the total mixture, of polyesters of the formula I, II or III.

13. A process for the production of cured products which comprises curing a composition containing components a), b) and c) according to claim 1 in a manner known per se.

14. A process for the production of a meltable, but still curable, precondensate which comprises heating a composition according to claim 1 in a manner known per se.

15. Use of the composition containing a) epoxide resins and b) polyesters of the formulae I, II and/or III according to claim 1 as an adhesive.

16. Use of an adduct formed from a) epoxide resins and b) polyesters of the formulae I, II and/or III according to claim 1 as an adhesive.